**Europäisches Patentamt**

**European Patent Office**

**Office européen des brevets**

(11) Veröffentlichungsnummer: **0 144 928**
**B1**

(12) **EUROPÄISCHE PATENTSCHRIFT**

(45) Veröffentlichungstag der Patentschrift:
03.05.89

(51) Int. Cl.⁴: **G 01 N 21/59**

(21) Anmeldenummer: **84114538.6**

(22) Anmeldetag: **30.11.84**

(54) Photometerkopf für kleine Messvolumina.

(30) Priorität: **08.12.83 DE 3344387**

(43) Veröffentlichungstag der Anmeldung:
**19.06.85 Patentblatt 85/25**

(45) Bekanntmachung des Hinweises auf die Patenterteilung:
**03.05.89 Patentblatt 89/18**

(84) Benannte Vertragsstaaten:
**AT BE CH DE FR GB IT LI NL SE**

(56) Entgegenhaltungen:
EP-A- 0 064 110
DE-A- 1 598 831
FR-A- 2 254 801
FR-A- 2 384 255
FR-A- 2 508 171
GB-A- 2 105 028

(73) Patentinhaber: **HOECHST AKTIENGESELLSCHAFT,**
**Postfach 80 03 20, D-6230 Frankfurt am Main 80 (DE)**

(72) Erfinder: **Gross, Jürgen, Dr., Frankfurter Strasse 4,**
**D-6238 Hofheim am Taunus (DE)**
Erfinder: **Dinges, Reinhard, Dr., Martin-Luther-Weg 3,**
**D-6232 Bad Soden am Taunus (DE)**

ACTORUM AG

**Beschreibung**

Gegenstand der Erfindung ist ein Photometerkopf für kleine Meßvolumina mit einem Lichtsender und einem Lichtempfänger, deren Flächen für den Austritt bzw. den Eintritt der Lichtenergie aus dem Lichtsender bzw. Lichtempfänger sich mit Abstand gegenüberstehen.

Photometerköpfe der genannten Art sind aus der französischen Patentanmeldung 2 297 415 bekannt. Die zu messende Substanz wird mittels einer Küvette in den Strahlengang zwischen Lichtsender und Lichtempfänger gebracht. Nachteilig ist das relativ große Meßvolumen das benötigt wird. Denn die Küvetten können nicht beliebig verkleinert werden, da damit Störeinflüsse, herrührend vom Flüssigkeitsmeniskus, von der Küvette selbst, von Blasen etc. immer stärker hervortreten.

Die Aufgabe zu vorliegender Erfindung besteht demnach darin, einen Photometerkopf zu schaffen, mit dem auch kleinste Flüssigkeitsvolumina störungsfrei gemessen werden können.

Die Aufgabe wird durch einen Photometerkopf gelöst, der dadurch gekennzeichnet ist, daß ein Materialblock eine Ausnehmung aufweist, die mit einer Platte abgedeckt ist, im Materialblock mindestens ein Paar von Lichtsender und Lichtempfänger angeordnet ist, Lichtsender und Lichtempfänger in die Ausnehmung hineinragen und mit ihren Flächen einen Spalt zur Aufnahme einer flüssigen Probe bilden, in dem die Probe durch direkten Kontakt mit den Flächen gehalten wird, die Platte mit einer Bohrung zum Heranführen einer Applikationseinrichtung für die Probe in den Spalt versehen ist, und der Materialblock Ausschlüsse zum Zuführen der Sendeenergie und Abführen der Empfangsenergie besitzt.

In einer Ausgestaltung sind die Lichtsender und Lichtempfänger mit selbstfokussierenden optischen Einrichtungen versehen. Der Materialblock kann eine Einrichtung zum Thermostatisieren aufweisen und die Ausnehmung im Materialblock mit Kanälen zum Zu- und Abführen eines Flüssigkeitsbzw. eines Luftstromes in Verbindung stehen.

Im folgenden wird die Erfindung anhand von lediglich einen Ausführungsweg darstellenden Zeichnungen näher erläutert. Es zeigt

Figur 1 den Schnitt I–I des erfindungsgemäßen Photometerkopfes von Figur 2 und

Figur 2 eine Draufsicht auf einen Ausschnitt eines Photometerkopfes mit mehreren Paaren von Lichtsendern und Lichtempfängern.

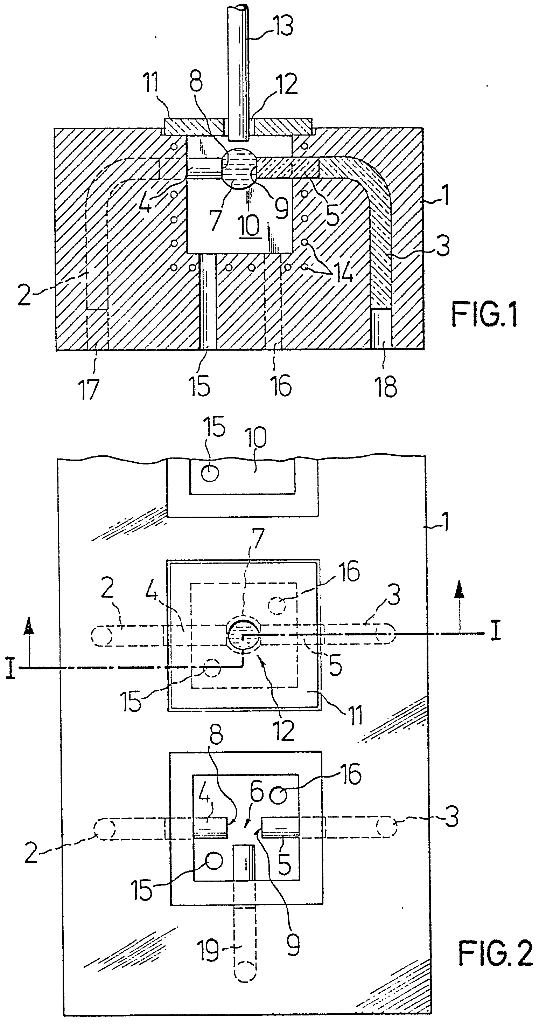

Bei dem Photometerkopf für kleine Meßvolumina sind die Paare von Lichtsender 2 und Lichtempfänger 3 in einem Materialblock 1 aus Kunststoff, Kunstharz, Metall usw. angeordnet. Als Lichtsender 2 eignen sich Lichtquellen, wie Lampen oder Leuchtdioden oder Glasfaserlichtleiter, als Lichtempfänger 3 Photodioden oder Lichtleiter. Die Figuren zeigen Lichtleiter als Lichtsender 2 und Lichtempfänger 3, deren Enden mit selbstfokussierenden optischen Einrichtungen 4 und 5 versehen sind. Die selbstfokussierenden Einrichtungen 4 und 5 stehen sich gegenüber. Zwischen ihren Flächen 8, 9 befindet sich ein Luftspalt 6 (Figur 2) in den z.B. mittels einer Dispensernadel eine Probe 7 (Figur 1) der zu untersuchenden Flüssigkeit eingebracht werden kann. Der Materialblock 1 weist im Bereich der Flächen eine Ausnehmung 10 auf, die mit einer Platte 11 abgedeckt ist. Die Platte 11 soll weitgehend das Verdampfen der flüssigen Probe 7 verhindern. Sie ist mit einer Bohrung 12 zum Heranführen der Applikationseinrichtung 13 versehen. Der Materialblock kann Einrichtungen 14 zum Thermostatisieren und Kanäle 15, 16 zum Zuführen von Flüssigkeit zum Reinigen der Flächen 8, 9 bzw. eines Luftstromes zum Trocknen derselben aufweisen. Die Ausnehmungen 17, 18 dienen als Anschlüsse für die Sender und Empfänger an ihre Energiequellen, sowie dem Ankuppeln des Photometerkopfes an das Photometer (nicht dargestellt).

In Figur 2 wird außerdem ein weiterer Lichtempfänger 19 gezeigt, der gegenüber der optischen Achse des Lichtsenders 2 und Lichtempfängers 3 um 90° gedreht angeordnet ist.

Der erfindungsgemäße Photometerkopf hat den Vorteil, daß keine Küvette mit all ihren Nachteilen bei optischen Messungen mehr benötigt wird, und das Meßvolumen durch Gestaltung der Flächen beeinflußt werden kann.

**Patentansprüche**

1. Photometerkopf für kleine Meßvolumina mit einem Lichtsender und einem Lichtempfänger, deren Flächen für den Austritt bzw. für den Eintritt der Lichtenergie aus dem Lichtsender bzw. Lichtempfänger sich mit Abstand gegenüberstehen, dadurch gekennzeichnet, daß ein Materialblock (1) eine Ausnehmung (10) aufweist, die mit einer Platte (11) abgedeckt ist, im Materialblock (1) mindestens 1 Paar von Lichtsender (2) und Lichtempfänger (3) angeordnet ist, Lichtsender (2) und Lichtempfänger (3) in die Ausnehmung (10) hineinragen und mit ihren Flächen (8, 9) einen Spalt (6) zur Aufnahme einer flüssigen Probe (7) bilden, in dem die Probe durch direkten Kontakt mit den Flächen (8, 9) gehalten wird, die Platte (11) mit einer Bohrung (12) zum Heranführen einer Applikationseinrichtung (13) für die Probe (7) in den Spalt (6) versehen ist, und der Materialblock (1) Anschlüsse (17, 18) zum Zuführen der Sendeenergie und Abführen der Empfangsenergie besitzt.

2. Photometerkopf nach Anspruch 1, dadurch gekennzeichnet, daß die Lichtsender 2 und Lichtempfänger 3 mit selbstfokussierenden optischen Einrichtungen 4, 5 versehen sind,

3. Photometerkopf nach den Ansprüchen 1 und 2, dadurch gekennzeichnet, daß der Materialblock 1 eine Einrichtung 14 zum Thermostatisieren aufweist.

4. Photometerkopf nach den Ansprüchen 1 bis 3, dadurch gekennzeichnet, daß die Ausnehmung 10 im Materialblock 1 mit Kanälen 15, 16 zum Zu- und Abführen eines Flüssigkeits- bzw. eines Luftstromes in Verbindung steht.

5. Photometerkopf nach den Ansprüchen 1 bis 4, dadurch gekennzeichnet, daß dem Paar von Lichtsender 2 und Lichtempfänger 3 ein weiterer um 90° gegenüber der optischen Achse des Lichtsenders 2 gedrehter Lichtempfänger angeordnet ist.

## Claims

1. Photometric head for small sample volumes and comprising a light transmitter and a light receiver, the surfaces of which for the emergence or for the entrance, respectively, of the light energy from the light transmitter or into the light receiver, respectively, are situated opposite to each other at a distance, wherein a block of material (1) has a recess (10) which is covered with a plate (11), in the block of material (1) at least one pair of light transmitters (2) and light receivers (3) is arranged, light transmitter (2) and light receiver (3) protrude into the recess (10) and form with their surfaces (8, 9) a gap (6) for accomodating a liquid sample (7) in which the sample is held by direct contact with the surfaces (8, 9), the plate (11) is provided with a hole (12) for guiding an applicator (13) for the sample into the gap (6) between the surfaces (8, 9) and the block of material (1) has connections (17, 18) for supplying the transmitting energy and removing the received energy.

2. Photometric head as claimed in claim 1, wherein the light transmitters (2) and light receivers (3) are provided with self-focussing optical devices (4, 5).

3. Photometric head as claimed in claims 1 and 2, wherein the block of material (1) is provided with a device (14) for thermostatic control.

4. Photometric head as claimed in claims 1 to 3, wherein the recess (10) in the block of material (1) is joined to ducts (15, 16) for supplying and removing a stream of liquid and a stream of air, respectively.

5. Photometric head as claimed in claims 1 to 4, wherein the light transmitter (2) and light receiver (3) pair is associated with another light receiver which is rotated by 90° with respect to the optical axis of the light transmitter (2).

## Revendications

1. Tête photométrique pour de faibles volumes à mesurer avec un émetteur de lumière et un récepteur de lumière, dont les surfaces de sortie et d'entrée de l'énergie lumineuse hors de l'émetteur de lumière et dans le récepteur de lumière sont à une certaine distance l'une de l'autre, caractérisée en ce qu'un bloc (1) de matériau présente un évidement (10), qui est recouvert d'une plaque (11), en ce que dans le bloc (1) de matériau se trouve au moins une paire d'émetteur (2) de lumière et de récepteur (3) de lumière, en ce que l'émetteur (2) de lumière et le récepteur (3) de lumière font saillie dans l'évidement (10) et constituent avec leurs surfaces (8, 9) un interstice (6) destiné à recevoir un échantillon (7) de fluide dans lequel l'échantillon est maintenu en contact direct avec les surfaces (8, 9), en ce que la plaque (11) comporte un alésage (12) pour approcher un dispositif (13) d'application de l'échantillon (7) dans l'interstice (6), et en ce que le bloc (1) de matériau possède des connexions pour l'amenée de l'énergie émise et l'enlèvement de l'énergie reçue.

2. Tête photométrique selon la revendication 1, caractérisée en ce que l'émetteur (2) de lumière et le récepteur (3) de lumière comportent des dispositifs (4, 5) optiques autofocalisants.

3. Tête photométrique selon les revendications 1 et 2, caractérisée en ce que le bloc (1) de matériau présente un dispositif (14) agissant en thermostat.

4. Tête photométrique selon les revendications 1 à 3, caractérisée en ce que l'évidement (10) dans le bloc (1) de matériau est en relation avec des canaux (15, 16) pour l'amenée et l'enlèvement d'un courant de fluide ou d'air.

5. Tête photométrique selon les revendications 1 à 4, caractérisée en ce qu'il est disposé un autre récepteur de lumière tourné à 90° par rapport à l'axe optique de l'émetteur (2) de lumière en plus de l'émetteur (2) de lumière et du récepteur (3) de lumière.

FIG.1

FIG.2